# EUROPEAN PATENT SPECIFICATION

(11) **EP 1 527 965 B1**
(45) Date of publication and mention of the grant of the patent: **16.08.2006**
(21) Application number: 04380213.1
(22) Date of filing: 28.10.2004
(51) Int. Cl.: B60R 21/20

(54) **Device for controlling the opening of the cover of an airbag**
Einrichtung zur Steuerung der Öffnung einer Airbagabdeckung
Dispositif pour commander l'ouverture d'un couvercle pour sac gonflable

(30) Priority: 29.10.2003 ES 200302453 U
(43) Date of publication of application: 04.05.2005
(73) Proprietor: Seat, S.A., 08040 Barcelona (ES)
(72) Inventor: Gutierrez Plaza, Sonia, 08760 Martorell (Barcelona) (ES); Martos Ortega, Antonio, 08760 Martorell (Barcelona) (ES)
(74) Representative: Carvajal y Urquijo, Isabel

(56) References cited:
- EP-A- 0 872 389
- DE-A- 19 645 866
- FR-A- 2 809 361
- US-A- 5 653 461
- PATENT ABSTRACTS OF JAPAN vol. 1995, no. 06, 31 July 1995 (1995-07-31) & JP 07 069161 A (INOAC CORP), 14 March 1995 (1995-03-14)

## Description

The present invention refers to a device for controlling the opening of the cover of an airbag, and more specifically, of the front passenger airbag, which is located in the dashboard of automotive vehicles.

The airbag is a safety device designed to reduce the risk of injuries to drivers and occupants, mainly covering the area of the head and torso in the event of a collision of the vehicle. The system prevents the occupants from being thrown forwards and hitting against the windshield, dashboard or steering column, causing severe injuries to the occupants in the event of an accident.

The airbag is actuated due to an abrupt change of the general inertia of the automobile, as occurs in the event of a frontal impact against an obstacle or another vehicle. An electronic system with microprocessors picks up the impact and triggers the detonator, exciting the fuse with a pyrotechnic load by means of an electrical signal causing the detonation of this load. This reaction generates the combustion of gas at a high pressure, which causes the gas to exit the pressurized recipient through a metal filter. As a result, a gas is obtained with a pressure suitable for being able to fill the bag, which is strong enough to withstand the blast of the pyrotechnic explosion.

In an automotive vehicle, the passenger airbag is assembled in the vehicle dashboard, inside a discharge chute located behind said dashboard and opens frontally through an opening made therein. This opening is closed by means of a cover which, when the airbag is actuated, is abruptly separated to prevent it from popping out and reaching the passenger, it is connected to the discharge chute by means of a flexible retention sheet or strip.

The discharge chute is one of the most important elements of the entire airbag system assembly, given that its purpose is to support the airbag module and guide the bag outwardly at the moment in which it is discharged, so that it is essential to provide it with good protection. EP-A-0 872 389, which shows all the features of the preamble of claim 1, discloses such an airbag module assembly. However, the current system of fixing the cover to the discharge chute may cause problems in the integrity of the dashboard at the moment it is discharged, causing breakages or deformations which are unacceptable for the structure thereof.

In the current systems of fixing the cover to the discharge chute, when the cover is opened due to actuation of the airbag, it can be observed that the flexible retention sheet or strip strains the entire linkage system and drags with it the rear portion of the dashboard, even the discharge chute, causing the lining of the dashboard on the passenger side, the framework and even the joining of the flexible sheet or strip with the discharge chute to break. It may also occur that the cover, since it has stresses opposite to the flexible sheet or strip, at times pops out towards the windshield, causing damage and deteriorations on the surface thereof.

The object of the present invention is to eliminate the drawbacks discussed above by means of a device which controls the opening of the cover and prevents the abrupt separation thereof, eliminating the risks of deterioration of the dashboard, windshield, etc.

The device of the invention is constituted of a metal ring fixed on the inner edge of the discharge chute. This ring has an outer flap through which the flexible sheet or strip is fixed to the discharge chute. The flap is provided with a weakening line or strip at its starting point which is parallel to the ring, at which line said flap bends and yields when it is pulled by the mesh due to the effect of the opening and separation of the cover.

With the mentioned constitution, the flap of the ring acts as a hinge for the opening of the cover of the dashboard housing the passenger airbag. Furthermore, when this flap bends due to the effect of the pull it undergoes through the flexible sheet or strip when the airbag is actuated, it acts as a fuse, absorbing energy and thus preventing the cover from accelerating too much, whereby the risk that breakages may occur when it makes contact with the rest of the dashboard is eliminated.

The following is achieved with the described arrangement:
- Preventing breakages in the airbag discharge chute in the lining on the passenger side.
- Decreasing the effects of the cover striking the windshield by means of the use of the fuse system which will absorb part of the kinetic energy the cover acquires during the opening of the system.
- Providing strength to the discharge chute, given that the metal ring acts as a reinforcement thereof.

The flap will preferably project from the ring from one of the outer longitudinal edges thereof and will be bent about 90° with regard to said ring, being positioned in a direction opposite to that occupied by the discharge chute. The weakening line or strip runs parallel and close to the bend line, thus acting as a hinge or joint when the flap bends when the airbag is actuated, as previously set forth.

The flexible sheet or strip is fixed along the length of the flap, outside of the weakening line or strip thereof, fixing which can be carried out by means of screws, rivets, etc.

The features and advantages set forth are explained below in more detail with the aid of the attached drawings, in which a non-limiting embodiment has been shown, and in which:
Figure 1 shows a schematic cross-sectional view of the dashboard of a vehicle, in the passenger area, in the zone occupied by the airbag thereof.
Figure 2 shows a perspective view of the ring forming part of the device of the invention.
Figure 3 shows the rear side of the discharge chute, prior to fixing the ring, with the cover.
Figure 4 shows a view similar to Figure 3, once the ring is fixed to the discharge chute.

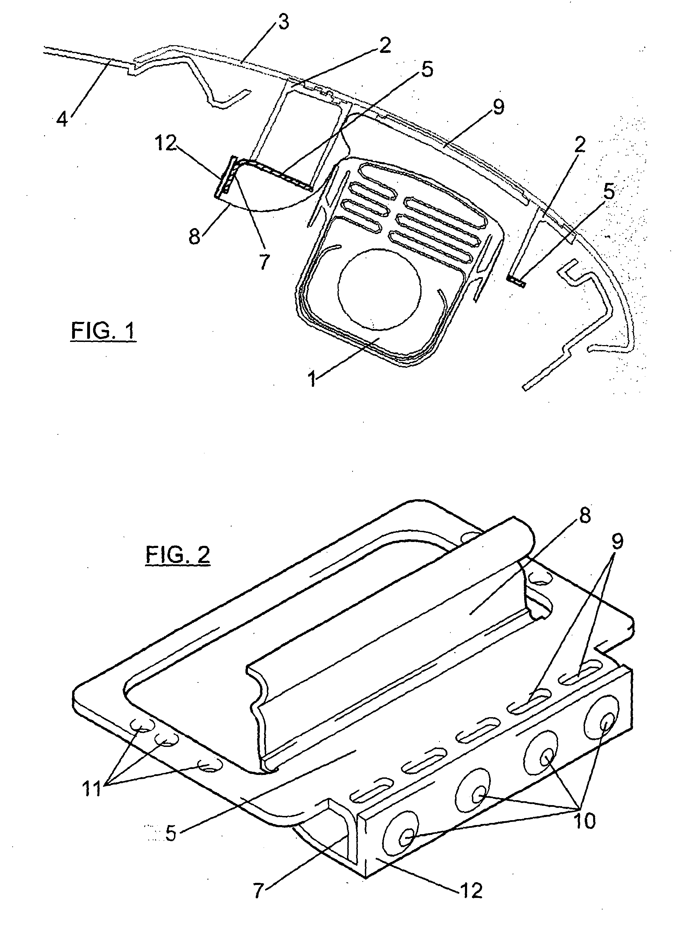

Figure 1, which corresponds to a cross-sectional view of the dashboard of the vehicle in the passenger side area, coinciding with the airbag housing, shows how the airbag 1 module is arranged inside the discharge chute 2 which is attached, for example by means of welding, to the outer lining of the dashboard 3.

According to the present invention, a metal ring 5, fixed by means of screws, is arranged on the inner edge of the discharge chute 2, as will be explained below. The ring 5 has a flap 7 on one of its sides, to which flap a flexible sheet or strip 8 is fixed, which, on the opposite side, is attached to a cover 9 closing the hole or opening of the dashboard 4 defined by the discharge chute 2.

Figure 2 shows a perspective view of the metal ring 5, which adopts the shape of a frame of an outline approximately coinciding with the inner outline of the discharge chute 2. The flexible sheet or strip 8 passes through the outline of this ring and is fixed to the flap 7 of the ring 5 by means of rivets or screws 10. For its part, this ring is fixed to the discharge chute 2, for example by means of screws introduced through holes 11, which may be located on the smaller opposite sides of the ring or frame 5.

The flexible sheet or strip 8 may be constituted on the basis of a resistant plastic material, for example PVC-coated polyester. On the edge where it is joined with the flap 7, this sheet or strip may have a reinforcement strip 12, Figures 1 and 2.

As can also be seen in Figure 2, the flap 7 projects from one of the outer longitudinal edges of the ring or frame 5 and is bent at about 90° with regard to said ring, being positioned in a direction opposite to that occupied by the discharge chute 2. Between its starting point with regard to the ring or frame 5 and the bend line, the flap furthermore has a series of notches or openings 9 forming a weakening line or strip, which will act as a hinging line of the flap during the operation of the device, when the airbag is actuated and the separation of the cover 9 occurs, which pulls on the flap 7, through the flexible strip or sheet 8, causing said flap to bend through the weakening line or strip defined by the notches or openings 9. This bending operation is carried out with the corresponding absorption of energy, thus carrying out the functions of fuses in the moment the passenger airbag is discharged, reducing the energy resulting from the separation of the cover 9, protecting the dashboard 4, lining 3 and windshield from breaking and deforming. The ring or frame 5 furthermore provides strength to the entire airbag assembly, as it considerably reinforces the discharge chute 2.

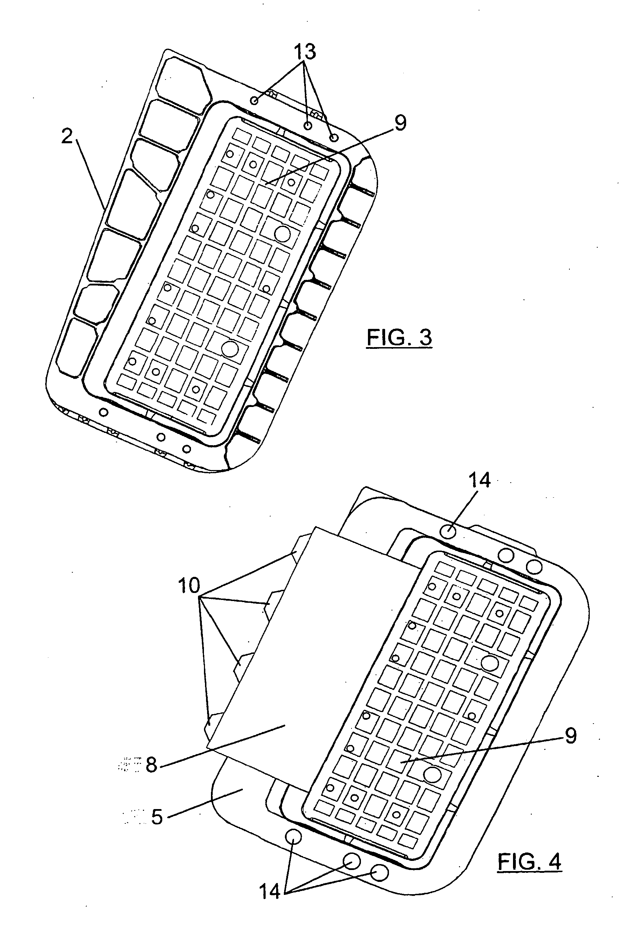

Figure 3 shows the rear side of the discharge chute 2 to which the ring 5 will be fixed. The holes 13 with which the holes 11 of the ring or frame, Figure 2, will coincide for fixing said ring, can be seen. Also shown in this figure is the cover 9, which will be released or separated when the airbag is actuated.

Lastly, Figure 4 shows the ring 5 fixed to the rear edge of the discharge chute 2, through screws or rivets 14. The flexible sheet or strip 8 joined to the flap 7 by means of rivets or screws 10 can also be seen in this figure.

All things considered, controlling and reducing the energy resulting from the separation of the cover 9 of the airbag, while at the same time reinforcing the discharge chute 2, are achieved by means of the device of the invention.

## Claims

1. A device for controlling the opening of the cover of an airbag, which cover (9) closes a discharge chute (2) housing the airbag module and is connected to said chute by means of a flexible sheet or strip (8), **characterized in that** it comprises a metal ring or frame (5) fixed on the inner edge of the discharge chute (2) and has an outer flap (7) through which the flexible sheet or strip is fixed to said discharge chute; which flap has at its starting point a weakening line or strip (15) parallel to the ring on which it bends, and said flap yields when it is pulled on by the flexible sheet or strip due to the effect of the opening and separation of the cover.

2. A device according to claim 1, **characterized in that** said flap (7) projects from one of the outer longitudinal edges of the metal ring or frame (5) and is bent about 90° with regard to said ring, positioned in a direction opposite to that occupied by the discharge chute, the weakening line or strip running parallel and close to the bend line.

3. A device according to claims 1 and 2, **characterized in that** the flexible sheet or strip is fixed along the entire length of the flap, starting from the weakening line or strip.

## Patentansprüche

1. Vorrichtung zum Steuern des Öffnens der Abdeckung eines Airbags, wobei die Abdeckung (9) eine Austragsrinne (2) verschließt, die das Airbagmodul aufnimmt und mit der Rinne mit Hilfe einer flexiblen Bahn oder eines flexiblen Streifens (8) verbunden ist, **dadurch gekennzeichnet, dass** die Vorrichtung einen Metallring oder -rahmen (5) aufweist, der an dem Innenrand der Austragsrinne (2) befestigt ist und eine äußere Lasche (7) hat, durch welche die flexible Bahn oder der flexible Streifen an der Austragsrinne festgelegt ist, wobei die Lasche an ihrem Ausgangspunkt eine Schwächungslinie oder einen Schwächungsstreifen (15) hat, der parallel zu dem Ring ist, von dem sie abgebogen ist, und wobei die Lasche nachgibt, wenn an ihr durch die flexible Bahn oder den flexiblen Streifen aufgrund der Wirkung des Öffnens und Abtrennens der Abdeckung gezogen wird.

2. Vorrichtung nach Anspruch 1, **dadurch gekennzeichnet, dass** die Lasche (7) von einem der äußeren Längsränder des Metallrings oder -rahmens (5) vorsteht, bezüglich des Rings um etwa 90° abgebogen und in der Richtung angeordnet ist, die zu der entgegengesetzt ist, die die Austragsrinne einnimmt, wobei die Schwächungslinie oder der Schwächungsstreifen parallel zur und nahe an der Biegelinie verläuft.

3. Vorrichtung nach Anspruch 1 und 2, **dadurch gekennzeichnet, dass** die flexible Bahn oder der flexible Streifen auf der gesamten Länge der Lasche ausgehend von der Schwächungslinie oder dem Schwächungsstreifen befestigt ist.

## Revendications

1. Dispositif de contrôle de l'ouverture du cache d'un airbag, lequel cache (9) ferme une goulotte d'éjection (2) logeant le module d'airbag et est relié à ladite goulotte d'éjection au moyen d'un matériau ou d'une bande flexible (8), **caractérisé en ce qu'**il comprend un anneau ou un cadre de métal (5) fixé à l'intérieur de la goulotte d'éjection (2) et possède une trappe externe (7) à travers laquelle le matériau ou la bande flexible est fixé à ladite goulotte d'éjection, laquelle trappe possède à son point de départ une ligne ou une bande affaiblissante (15) parallèle à l'anneau sur lequel elle se plie, et ladite trappe cède lorsqu'elle est tirée par le matériau ou la bande flexible en raison de l'effet de l'ouverture et de la séparation du cache.

2. Dispositif selon la revendication 1, **caractérisé en ce que** ladite trappe (7) est projetée de l'un des coins longitudinaux externes de l'anneau ou du cadre de métal (5) et est pliée d'environ 90° par rapport au dit anneau, est positionnée dans une direction opposée à celle occupée par la goulotte d'éjection, la ligne ou la bande affaiblissante étant parallèle et près de la ligne de pliage.

3. Dispositif selon les revendications 1 et 2, **caractérisé en ce que** le matériau ou la bande flexible est fixée sur toute la longueur de la trappe, à partir de la ligne ou de la bande affaiblissante.
